# FASCICULE DE BREVET EUROPEEN

(11) **EP 1 473 449 B1**
(45) Date de publication et mention de la délivrance du brevet: **23.03.2011**
(21) Numéro de dépôt: 04291104.0
(22) Date de dépôt: 29.04.2004
(51) Int. Cl.: F01P 7/02, B60K 11/08, F01P 7/12

(54) **Dispositif de régulation d'un flux d'air pour un module de refroidissement de véhicule automobile**
Vorrichtung zur Steuerung des Luftstromes für ein Kühlmodul eines Kraftfahrzeugs
Cooling air controlling device for a cooling module of a vehicle

(30) Priorité: 29.04.2003 FR 0305261
(43) Date de publication de la demande: 03.11.2004
(73) Titulaire: VALEO SYSTEMES THERMIQUES, 78320 Le Mesnil Saint-Denis (FR)
(72) Inventeur: Lanard, Jean-Louis, 78810 Feucherolles (FR); Harand, Pascal, 78190 Trappes (FR)
(74) Mandataire: Rolland, Jean-Christophe

(56) Documents cités:
- WO-A-01/79671
- DE-A- 3 150 152
- GB-A- 552 153
- US-B1- 6 302 228
- US-B1- 6 405 819

## Description

L'invention se rapporte aux échangeurs de chaleur pour véhicules automobiles, et elle concerne plus particulièrement un dispositif de régulation d'un flux d'air à travers un module de refroidissement d'un véhicule automobile.

Un véhicule automobile est classiquement équipé d'un module de refroidissement placé dans la partie antérieure ou avant du véhicule, généralement sous le capot moteur et/ou dans la face avant du véhicule.

Un tel module de refroidissement est composé habituellement d'un ou de plusieurs échangeurs de chaleur. Dans sa forme la plus simple, le module de refroidissement se limite au radiateur de refroidissement du moteur. Dans des formes plus évoluées, le module de refroidissement comprend le plus souvent au moins un autre échangeur de chaleur, en particulier un condenseur de climatisation.

Le module de refroidissement ainsi constitué est placé traditionnellement à l'avant du véhicule pour pouvoir être refroidi par échange thermique avec un flux d'air qui, le plus souvent, est acheminé au travers de la calandre du véhicule.

Or, la configuration des faces avant des véhicules automobiles évolue considérablement, notamment en raison de contraintes liées au design ou au style du véhicule, à l'aérodynamisme du véhicule, ou encore à la réglementation sur les chocs.

Ceci a pour conséquence que le module de refroidissement peut être placé en un emplacement non traditionnel, ce qui pose un problème pour son refroidissement.

Ce problème est encore aggravé par le fait que, dans de nombreux véhicules, la calandre est pratiquement supprimée.

D'autre part, il est souhaitable de pouvoir réguler le flux d'air qui traverse le module de refroidissement, notamment en fonction de la vitesse du véhicule, des conditions de charge du moteur, etc.

Il est connu pour cela de placer, par exemple, des registres devant le module de refroidissement pour réguler le débit du flux d'air qui le traverse. Toutefois, une telle structure est relativement complexe et ne se prête pas aux véhicules automobiles actuels.

Il est aussi connu du document WO01/79671 un dispositif de régulation d'un flux d'air selon le préambule de la revendication 1.

L'invention a notamment pour but de surmonter les inconvénients précités.

Elle vise plus particulièrement à permettre de réguler le flux d'air qui traverse le module de refroidissement, quelle que soit la configuration et donc le style de la face avant.

Elle vise aussi à optimiser l'aérodynamisme du véhicule, quand les conditions thermiques du moteur le permettent, tout en supprimant les contraintes de conception liées au style de la face avant.

L'invention propose à cet effet un dispositif de régulation d'un flux d'air à travers un module de refroidissement d'un véhicule automobile.

Selon une définition générale de l'invention, le dispositif comprend une plaque inférieure placée en position sensiblement horizontale sous le module de refroidissement et dans laquelle est aménagée au moins une ouverture de passage d'air, ainsi qu'au moins un volet mobile propre à contrôler l'ouverture sous l'action d'un mécanisme de commande, ce qui permet de réguler le débit d'un flux d'air de refroidissement prélevé à l'extérieur du véhicule et traversant le module de refroidissement.

Ainsi, l'invention consiste essentiellement à faire passer le flux d'air de refroidissement par au moins une ouverture située sous le module de refroidissement et dans une plaque inférieure. Cette plaque inférieure constitue une plaque d'isolation phonique et aérodynamique, couramment appelée "ski", que l'on trouve placée, dans une position sensiblement horizontale, sous la partie avant du véhicule.

Jusqu'à présent, une telle plaque joue seulement une fonction d'isolation phonique et une fonction aérodynamique.

La plaque inférieure de l'invention permet, grâce à au moins une ouverture contrôlée par un volet, de réguler le flux d'air qui est donc prélevé sous la partie avant du véhicule, traverse ensuite le module de refroidissement et est ensuite évacué à l'extérieur.

De la sorte, le dispositif de régulation de l'invention permet de s'affranchir de différentes contraintes, notamment celles liées au style de la face avant.

En effet, le dispositif de régulation de l'invention peut s'appliquer à différentes configurations de face avant, aussi bien de forme classique, que de forme plus moderne.

Dans l'invention, le ou les volets sont reliés à un mécanisme de commande qui permet de commander leur position, et donc de réguler le flux d'air, en fonction de différents paramètres liés notamment à la vitesse du véhicule, à la charge du moteur, à la température du moteur, etc.

Dans une forme de réalisation simplifiée de l'invention, la plaque inférieure comporte une seule ouverture placée en amont du module de refroidissement et contrôlée par un volet.

Cependant, dans une forme plus évoluée de l'invention, la plaque inférieure comporte une première ouverture placée en amont du module de refroidissement et contrôlée par un premier volet et une deuxième ouverture placée en aval du module de refroidissement et contrôlée par un deuxième volet. Dans ces conditions, le flux d'air peut passer par la première ouverture, traverser ensuite le module de refroidissement, puis s'échapper par la deuxième ouverture.

La forme de la ou des ouvertures ainsi que la structure du ou des volets sont susceptibles de nombreuses variantes.

Dans une première forme de réalisation, le volet est de forme générale plane et il est monté coulissant. Il peut être monté coulissant soit dans la direction longitudinale du véhicule (axe X), soit dans la direction transversale du véhicule (axe Y).

Dans une autre forme de réalisation de l'invention, le volet est de forme généralement plane et il est monté pivotant autour d'un axe. Ce mouvement de pivotement s'effectue de préférence autour d'un axe s'étendant dans la direction transversale du véhicule (axe Y).

En ce cas, le volet est avantageusement monté pivotant entre une position de fermeture, en laquelle il s'étend dans le plan de la plaque inférieure, et une position d'ouverture, en laquelle il s'étend obliquement par rapport au plan de la plaque inférieure.

A cet égard, il peut être prévu que, dans la position d'ouverture, le volet s'étende obliquement au-dessus du plan de la plaque inférieure, ou s'étende obliquement au-dessous du plan de la plaque inférieure.

La plaque inférieure peut être de forme généralement plane.

Il est avantageux aussi de prévoir que cette plaque comprenne une partie antérieure placée en avant du module de refroidissement et une partie postérieure placée en arrière du module de refroidissement et située à un niveau supérieur par rapport à la partie inférieure.

Le mécanisme de commande du dispositif de l'invention comprend avantageusement un moteur pas à pas couplé fonctionnellement au(x) volet(s).

Il est en outre avantageux que le mécanisme de commande gère la position du ou des volets sous l'action d'un module électronique qui gère les éléments thermiques et qui prend en compte la vitesse du véhicule et d'autres paramètres, par exemple la température extérieure, la température du moteur du véhicule, etc.

Dans l'invention, le module de refroidissement est avantageusement monté dans un support de face avant.

Dans une première réalisation, le ou les volets et le mécanisme de commande sont portés par le support de face avant, tandis que la plaque inférieure est réalisée sous la forme d'un composant séparé.

Dans une deuxième forme de réalisation de l'invention, le ou les volets, le mécanisme de commande et la plaque inférieure sont portés par le support de face avant.

Enfin, dans une troisième forme de réalisation de l'invention, le ou les volets, le mécanisme de commande et la plaque inférieure constituent un ensemble séparé, agencé pour être rapporté sur le support de face avant.

Dans la description qui suit, faite à titre d'exemple, il est fait référence aux dessins annexés, sur lesquels :
- la figure 1 est une vue en perspective d'un module de refroidissement équipé d'un dispositif de régulation d'un flux d'air selon une première forme de réalisation de l'invention ;
- la figure 2 est une vue analogue à la figure 1 dans une deuxième forme de réalisation du dispositif de l'invention ;
- la figure 3 est une vue analogue aux figures 1 et 2 dans une troisième forme de réalisation de l'invention ;
- la figure 4 est une vue analogue à la figure 1 dans une quatrième forme de réalisation de l'invention ;
- la figure 5 est une vue schématique de côté correspondant à la figure 4 ; et
- les figures 6 à 8 montrent un support de face avant de véhicule automobile, équipé d'un dispositif de régulation, selon trois formes de réalisation différentes ;
- les figures 9 et 10 sont des vues analogues aux figures 1 et 2 dans une cinquième forme de réalisation de l'invention ;
- les figures 11 et 12 sont des vues analogues aux figures 1 et 2 dans une sixième forme de réalisation de l'invention ;
- les figures 13 et 14 montrent un véhicule avec et sans calandre.

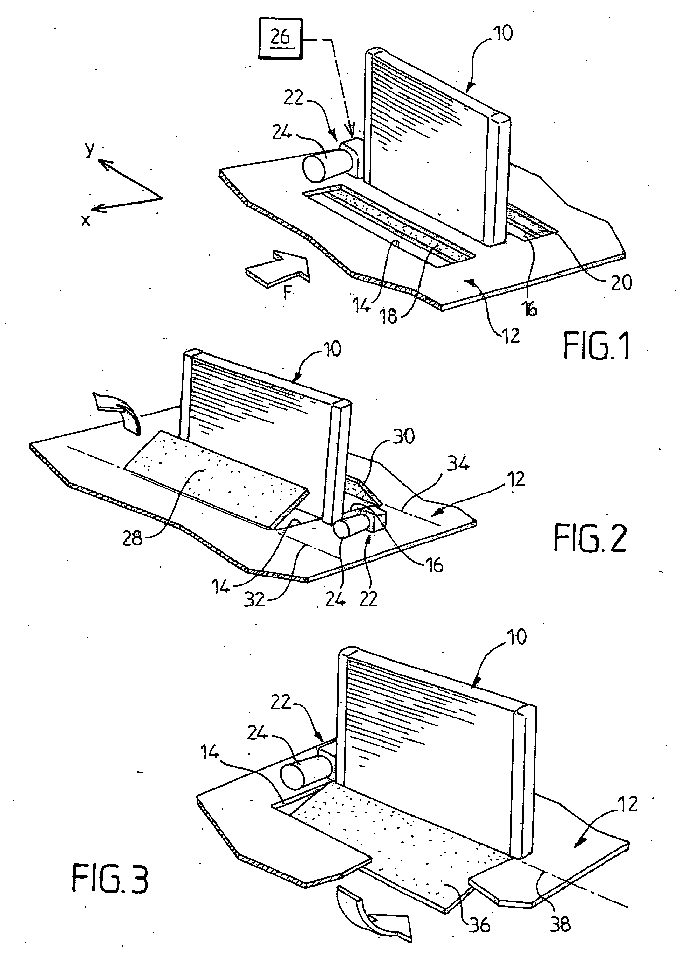

On se réfère d'abord à la figure 1 qui montre un module de refroidissement 10 placé à l'avant d'un véhicule automobile (non représenté). Ce module de refroidissement 10 est limité ici au radiateur de refroidissement du véhicule automobile et il est implanté dans une position généralement verticale et dans la direction transversale (axe Y) du véhicule.

En variante, le module de refroidissement 10 pourrait être constitué par un groupement de plusieurs échangeurs de chaleur, par exemple par un module constitué d'un radiateur de refroidissement du moteur et d'un condenseur de climatisation.

En dessous du module de refroidissement 10, est placée une plaque inférieure 12 en position sensiblement horizontale. Cette plaque inférieure 12 peut être constituée par une plaque insonorisante et/ou aérodynamique fixée sous la structure du véhicule et communément appelée "ski".

La plaque inférieure 12 comporte une première ouverture 14 de forme générale rectangulaire placée en amont du module de refroidissement 10, c'est-à-dire vers l'avant du véhicule. Elle comporte en outre une deuxième ouverture 16, également de forme rectangulaire, placée en aval du module de refroidissement, c'est-à-dire à l'arrière de celui-ci.

Les deux ouvertures 14 et 16, de forme générale rectangulaire ont des grands côtés qui s'étendent parallèlement entre eux et parallèlement à la direction transversale (axe Y) du véhicule et des petits côtés qui s'étendent parallèlement entre eux et parallèlement à la direction longitudinale (axe X) du véhicule.

Les ouvertures 14 et 16 sont contrôlées respectivement par deux volets 18 et 20 qui, tous les deux, sont de forme généralement plane et de structure rectangulaire. Ces deux volets sont des volets coulissants aptes à se déplacer dans la direction longitudinale du véhicule (axe X). Ils sont guidés pour cela par des glissières ou analogues (non représentés sur le dessin). Ces volets peuvent se déplacer sous l'action d'un mécanisme de commande 22 qui comprend, par exemple, un moteur électrique 24, du type pas-à-pas, qui actionne leur déplacement par un moyen de transmission approprié (non représenté). Celui-ci peut être constitué, par exemple, par une crémaillère, un pantographe, etc. Le mécanisme de commande 22 peut également être un vérin pneumatique ou hydraulique.

Les volets 14 et 16 sont agencés pour contrôler les ouvertures 18 et 20, c'est-à-dire pour être déplacés chacun entre une position de pleine ouverture et une position de pleine fermeture, avec possibilité de positions intermédiaires. Cela permet de contrôler un flux d'air F qui est prélevé à l'extérieur du véhicule, sous la plaque inférieure 12, passe par l'ouverture 14, traverse le corps du module de refroidissement 10 pour produire un flux d'air réchauffé. Ce flux d'air réchauffé passe ensuite par l'ouverture 16 pour être évacué vers l'extérieur sous la plaque inférieure 12. Le dispositif de régulation de la figure 1 permet ainsi de moduler et de réguler le flux d'air qui traverse le module de refroidissement en fonction de conditions ou paramètres extérieurs. Ceux-ci peuvent comprendre notamment la vitesse du véhicule, la charge du moteur, la température du moteur, etc. En particulier, par temps froid, et en face de démarrage du moteur, les volets 18 et 20 seront fermés pour faciliter la montée en température du moteur.

Inversement, lorsque le moteur est en pleine charge où il a besoin d'un refroidissement énergique, les volets seront complètement ouverts pour faciliter la circulation du flux d'air.

Bien entendu, le module de refroidissement 10 comprend aussi un groupe moto-ventilateur (non représenté) pour faciliter la circulation du flux d'air.

On conçoit que ce dispositif peut être implanté sur différents types de véhicules, sans subir de contrainte de la part du style de la face avant. Autrement dit, il peut être implanté sur des véhicules dont la face avant est de configuration classique, et aussi sur des véhicules dont la face avant a une forme plus moderne, par exemple une forme très profilée.

Bien que cela ne soit pas représenté sur la figure 1, il peut être prévu des canalisations d'air pour assurer un guidage et une bonne répartition du flux d'air sur tout ou partie des échangeurs de chaleur. Dans la forme de réalisation de la figure 1, le premier volet 18 permet d'ouvrir ou fermer l'ouverture 14 destinée à l'entrée d'air en amont du module de refroidissement. Le second volet 20 permet de créer ou fermer une ouverture en aval du module de refroidissement pour assurer une évacuation de l'air chaud.

Cependant, l'air chaud pourrait être évacué d'une manière traditionnelle, sans prévoir de deuxième ouverture et de deuxième volet, comme on le verra plus loin.

La gestion de la position des volets est commandée par le mécanisme de commande 22 sous l'action d'un module électronique 26 (non représenté en détail) qui gère les éléments thermiques et qui prend en compte la vitesse du véhicule et d'autres paramètres, par exemple la température extérieure, la température du moteur, etc.

L'étanchéité des ouvertures 14 et 16 peut être réalisée soit avec des joints, soit sans joint.

Comme déjà indiqué, une fermeture complète des ouvertures 14 et 16 permet de faciliter la montée en température du moteur.

Dans une variante de réalisation de la figure 1, (non représentée), les volets 18 et 20 pourraient être montés coulissants dans la direction transversale du véhicule, c'est-à-dire dans la direction de l'axe Y.

Dans la forme de réalisation de la figure 2, le dispositif de l'invention comporte aussi deux ouvertures 14 et 16 analogues à celles de la figure 1, mais ces deux ouvertures sont ici plus raprochées que dans la forme de réalisation précédente. Elles pourraient, en variante, former une seule ouverture s'étendant vers l'avant et vers l'arrière du module de refroidissement.

Par ailleurs, les ouvertures 14 et 16 sont contrôlées respectivement par deux volets 28 et 30 qui sont de type pivotant. Les deux volets sont constitués chacun d'une plaque plane de forme générale rectangulaire et ils pivotent respectivement autour d'un axe 32 et d'un axe 34 qui sont parallèles entre eux et parallèles à la direction transversale (axe Y) du véhicule. L'axe 32 est placé en avant de l'ouverture 14, tandis que l'axe 34 est placé en arrière de l'ouverture 16. Dans la position de fermeture des volets, ceux-ci s'étendent dans le plan de la plaque 12. Par contre, dans la position d'ouverture des volets, ces derniers s'étendent obliquement dans une direction ascendante, c'est-à-dire au-dessus du plan de la plaque. Dans la position représentée sur la figure 2, les deux volets sont chacun en position de semi-ouverture. On constate qu'ils permettent de former un convergent en s'ouvrant vers l'intérieur, c'est-à-dire dans une direction au-dessus de la plaque inférieure 12. L'ouverture 16 peut être munie de volets dynamiques (non représentés) en partie basse.

Dans la forme de réalisation de la figure 3, la plaque inférieure 12 comporte une seule ouverture 14, qui est placée en amont du module de refroidissement 10 et contrôlée par un volet 36. Ce dernier est un volet de forme générale rectangulaire monté pivotant autour d'un axe 38 qui s'étend dans la direction transversale (axe Y) du véhicule. L'axe 38 est placé ici à proximité de la partie inférieure du module de refroidissement.

A la différence des volets pivotants de la figure 2, le volet pivotant 36 pivote ici vers l'extérieur, c'est-à-dire vers le bas. Autrement dit, lorsque le volet est en position d'ouverture, il s'étend obliquement vers le bas, c'est-à-dire sous la plaque inférieure 12.

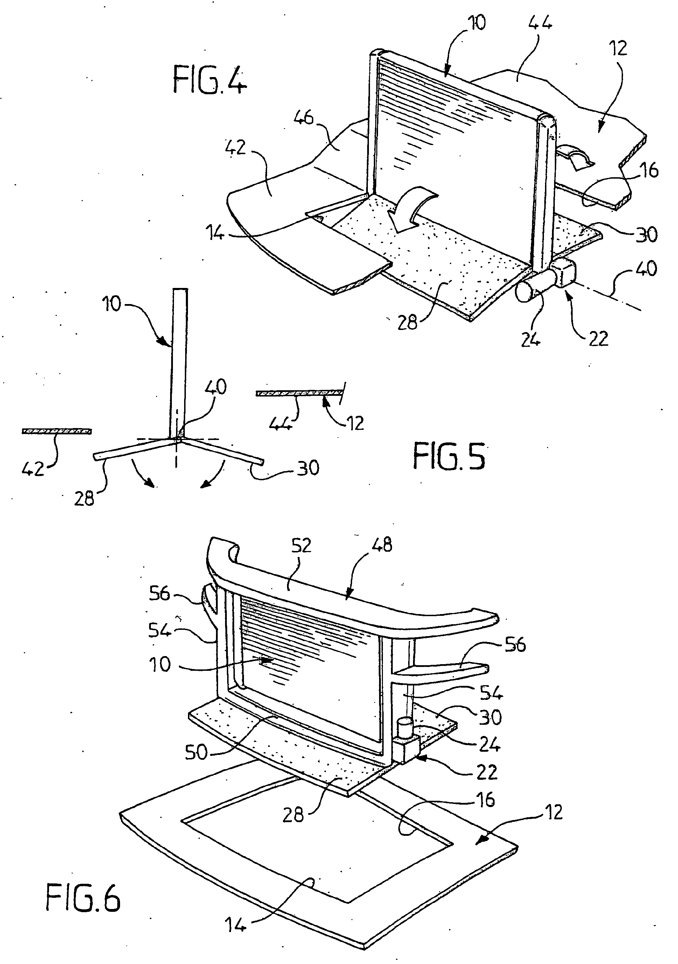

On se réfère maintenant à la figure 4 qui montre un dispositif selon une autre forme de réalisation de l'invention, qui s'apparente à celui de la figure 2. Le dispositif comprend ici deux volets 28 et 30, également de type pivotant, mais qui pivotent autour d'un axe commun 40 situé en partie inférieure du module de refroidissement 10. Les volets 28 et 30 s'ouvrent vers le bas, c'est-à-dire que, dans la position d'ouverture, ils s'étendent obliquement en-dessous de la plaque inférieure 12.

Par ailleurs, la plaque inférieure 12, au lieu d'être constituée par une plaque plane comme dans les formes de réalisations précédentes, possède un profil étagé. La plaque inférieure 12 possède une partie antérieure 42 placée en avant du module de refroidissement et une partie postérieure 44 placée en arrière du module de refroidissement et située à un niveau supérieur par rapport à la partie antérieure. Ces deux parties 42 et 44 sont reliées entre elles par une partie de transition 46. La partie postérieure 44 se trouve donc à un niveau plus élevé, par rapport au sol, que la partie antérieure 42.

Cette configuration de la plaque inférieure 12, en combinaison avec l'agencement des volets, permet de créer une dépression à l'arrière du module de refroidissement, ce qui permet de favoriser l'écoulement de l'air en profitant de l'aspiration d'air créée sous la caisse du véhicule automobile.

La figure 5 montre, en vue de côté, la position des volets 28 et 30 par rapport aux parties 42 et 44 de la plaque 42.

On se réfère maintenant à la figure 6 qui montre un support de face avant 48 destiné à être fixé à la structure d'un véhicule automobile. Ce support de face avant comprend essentiellement une poutre inférieure 50, une poutre supérieure 52, deux jambages verticaux 54 et deux éléments latéraux 56. Les poutres 50 et 52 ainsi que les deux jambages 54 délimitent une ouverture de forme générale rectangulaire dans laquelle est logé le module de refroidissement 10.

Les éléments latéraux 56 délimitent chacun, en combinaison avec une extrémité de la poutre supérieure 52, un logement pour un projecteur (non représenté).

Un tel support de face avant constitue un élément d'équipement, pré-monté, qui peut être assemblé sur un véhicule automobile, sur une chaîne d'assemblage.

On comprendra que tout ou partie du dispositif de régulation d'air de l'invention peut être combiné au support de face avant, ou être au contraire complètement séparé de celui-ci.

Dans le cas de la figure 6, les volets 28 et 30 ainsi que le mécanisme de commande 22 sont portés par le support de face avant 48. Par contre, la plaque inférieure 12 est réalisée sous la forme d'un composant séparé.

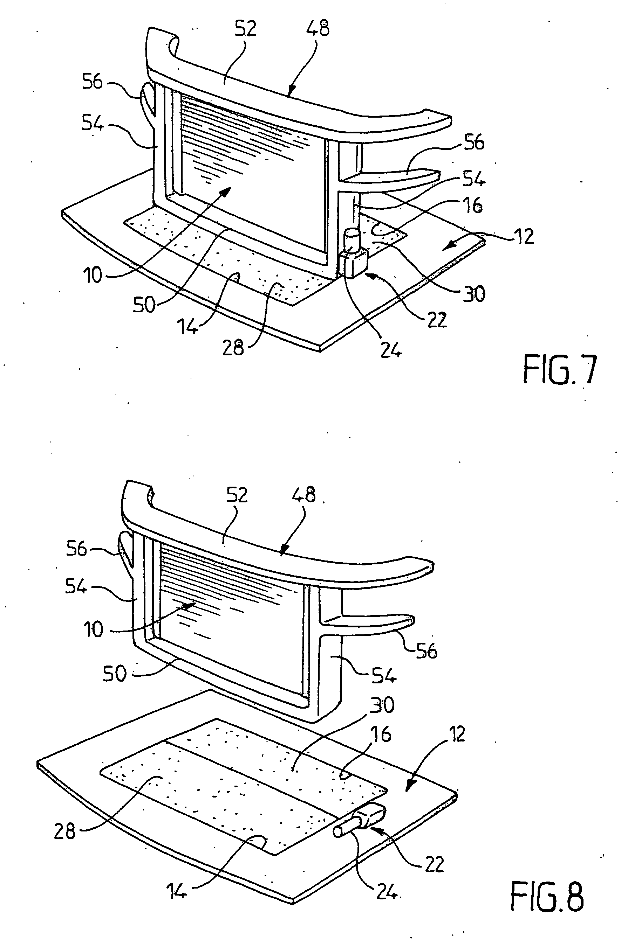

Dans le cas de la figure 7, les volets 28 et 30, le mécanisme de commande 22 et la plaque inférieure 12 sont tous portés par le support de face avant. L'ensemble constitue ainsi un élément d'équipement prêt à être monté sur le véhicule automobile lors de son assemblage.

Dans le cas de la figure 8, les volets 28 et 30, ainsi que le mécanisme de commande 22 et la plaque inférieure 12 constituent un ensemble séparé, agencé pour être rapporté sur le support de face avant. Autrement dit, le dispositif de l'invention est complètement séparé du support de face avant, mais il peut être fixé à celui-ci, ou à la structure du véhicule lors de l'assemblage de ce dernier.

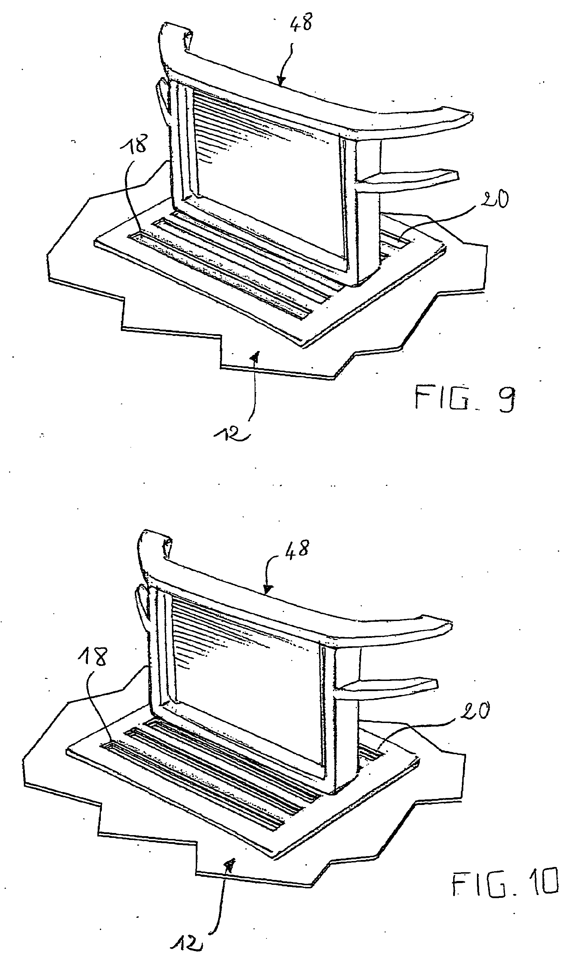

Aux figures 9 à 12, on a représenté des variantes de réalisation du dispositif de régulation d'air de l'invention. Dans ces exemples, le dispositif de régulation est combiné par exemple, à un support de face avant tel que décrit en relation avec la figure 6.

Dans la forme de réalisation des figures 9 et 10, le dispositif de l'invention comporte des volets 18 et 20 qui coulissent comme dans le dispositif de la figure 1, mais ces deux volets sont ici du type à registre, ce qui permet de limiter leur encombrement. Un mécanisme de commande (non représenté) sert à l'ouverture/fermeture des volets. La figure 9 montre les volets ouverts, tandis que la figure 10 montre les volets fermés.

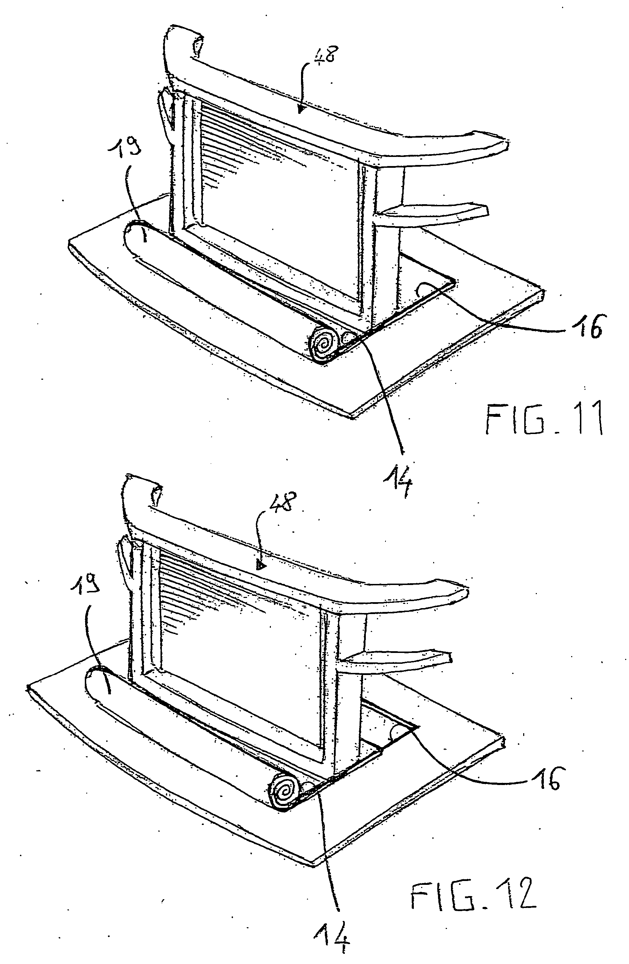

Dans la forme de réalisation des figures 11 et 12, le dispositif de l'invention comporte des ouvertures 14 et 16 analogues à celles de la figure 1 mais ces deux ouvertures sont ici plus rapprochées l'une de l'autre que dans la forme de réalisation de la figure 1. Elles pourraient, en variante, former une seule ouverture s'étendant vers l'avant et vers l'arrière du module de refroidissement.

Par ailleurs, les ouverture 14 et 16 sont contrôlées respectivement par un volet 19 du type à store ou à rideau qui dans la position déroulée de la figure 11 ferme les ouvertures 14 et 16 et qui dans la position enroulée de la figure 12 ouvre tout ou parti des ouvertures 14 et 16. Un mécanisme de commande (non représenté) sert à l'ouverture/fermeture du volet.

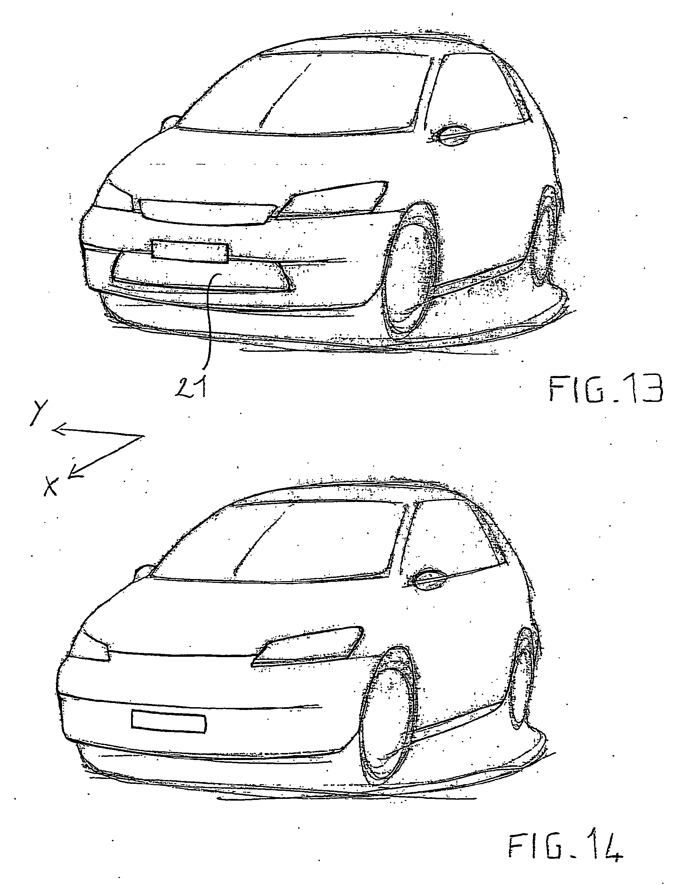

Enfin, aux figures 13 et 14, on montre l'influence que peut avoir le dispositif de régulation d'air de l'invention sur le design ou le style d'un véhicule automobile. En effet, on a représenté à la figure 13 un véhicule automobile selon l'état de la technique où le flux d'air qui est prélevé à l'extérieur du véhicule, pour refroidir le module de refroidissement du véhicule (non représenté), traverse une calandre 21.

A la figure 14, on a représenté un véhicule équipé du dispositif de régulation d'air selon l'invention (non représenté). Grâce à ce dispositif, il est possible de ce passer, au niveau de la façade avant du véhicule, de la traditionnelle calandre et, plus généralement, de toutes ouvertures d'air ménagées dans la façade pour l'entrée d'un flux d'air extérieur, offrant ainsi une plus grande liberté dans le design du véhicule.

On comprendra que le dispositif de l'invention est susceptible de nombreuses variantes de réalisation. Dans tous les cas, il permet de s'adapter à des faces avant de véhicule automobile ayant des formes très différentes.

## Revendications

1. Dispositif de régulation d'un flux d'air à travers un module de refroidissement (10) d'un véhicule automobile, comprenant une plaque inférieure (12) placée en position sensiblement horizontale sous le module de refroidissement (10) et dans laquelle est aménagée au moins une ouverture de passage (14, 16), ainsi qu'au moins un volet mobile (18, 20 ; 28, 30 ; 36) propre à contrôler l'ouverture sous l'action d'un mécanisme de commande (22), ce qui permet de réguler le débit d'un flux d'air de refroidissement (F) prélevé à l'extérieur du véhicule et traversant le module de refroidissement (10) **caractérisé en ce que** la plaque inférieure (12) comporte une première ouverture (14) placée en amont du module de refroidissement (10) et contrôlée par un premier volet (18 ; 28) et une deuxième ouverture (16) placée en aval du module de refroidissement (10) et contrôlée par un deuxième volet (20 ; 30).

2. Dispositif selon la revendication 2, **caractérisé en ce que** le volet (18 ; 20) est de forme généralement plane et est monté coulissant.

3. Dispositif selon la revendication 2, **caractérisé en ce que** le volet (18, 20) est monté coulissant dans la direction longitudinale du véhicule (axe x).

4. Dispositif selon la revendication 2, **caractérisé en ce que** le volet (18, 20) est monté coulissant dans la direction transversale du véhicule (axe Y).

5. Dispositif selon la revendication 1, **caractérisé en ce que** le volet (28, 30 ; 36) est de forme générale plane et est monté pivotant autour d'un axe (32, 34 ; 38).

6. Dispositif selon la revendication 5, **caractérisé en ce que** le volet (28, 30 ; 36) est monté pivotant autour d'un axe (32, 34 ; 38) s'étendant dans la direction transversale du véhicule (axe Y).

7. Dispositif selon la revendication 5, **caractérisé en ce que** le volet (28, 30 ; 36) est monté pivotant entre une position de fermeture en laquelle il s'étend dans le plan de la plaque inférieure (12), et une position d'ouverture, en laquelle il s'étend obliquement par rapport au plan de la plaque inférieure (12).

8. Dispositif selon la revendication 7, **caractérisé en ce que**, dans la position d'ouverture, le volet (28, 30) s'étend obliquement au-dessus du plan de la plaque inférieure (12).

9. Dispositif selon la revendication 7, **caractérisé en ce que**, dans la position d'ouverture, le volet (28, 30 ; 36) s'étend obliquement au-dessous du plan de la plaque inférieure (12).

10. Dispositif selon l'une des revendications 1 à 9, **caractérisé en ce que** la plaque inférieure (12) est de forme généralement plane.

11. Dispositif selon l'une des revendications 1 à 9, **caractérisé en ce que** la plaque inférieure (12) comprend une partie antérieure (42) placée en avant du module de refroidissement (10) et une partie postérieure (44) placée en arrière du module de refroidissement (10) et située à un niveau supérieur par rapport à la partie antérieure.

12. Dispositif selon l'une des revendications 1 à 11, **caractérisé en ce que** le mécanisme de commande (22) comprend un moteur pas à pas (24) couplé fonctionnellement au(x) volet(s) (18, 20 ; 28, 30 ; 36).

13. Dispositif selon l'une des revendications 1 à 12, **caractérisé en ce que** le mécanisme de commande (22) gère la position du ou des volets (18, 20 ; 28, 30 ; 36) sous l'action d'un module électronique (26) qui gère les éléments thermiques et qui prend en compte la vitesse du véhicule et d'autres paramètres, par exemple la température extérieure, la température du moteur du véhicule, etc.

14. Dispositif selon l'une des revendications 1 à 13, dans lequel le module de refroidissement (10) est monté dans un support de face avant (48), **caractérisé en ce que** le ou les volets (18, 20 ; 28, 30 ; 36) et le mécanisme de commande (22) sont portés par le support de face avant (48), tandis que la plaque inférieure (12) est réalisée sous la forme d'un composant séparé.

15. Dispositif selon l'une des revendications 1 à 13, dans lequel le module de refroidissement (10) est monté dans un support de face avant (48), **caractérisé en ce que** le ou les volets (18, 20 ; 28, 30 ; 36), le mécanisme de commande (22) et la plaque inférieure (12) sont portés par le support de face avant (48).

16. Dispositif selon l'une des revendications 1 à 13, dans lequel le module de refroidissement (10) est monté dans un support de face avant (48), **caractérisé en ce que** le ou les volets (18, 20 ; 28, 30 ; 36), le mécanisme de commande (22) et la plaque inférieure (12) constituent un ensemble séparé agencé pour être rapporté sur le support de face avant (48).

17. Véhicule automobile présentant une façade avant et comprenant un dispositif selon l'une quelconque des revendications 1 à 16, **caractérisé en ce que** ledit véhicule est apte à ne présenter aucune ouverture d'air au niveau de la façade avant dudit véhicule.

## Claims

1. Device for regulating a flow of air through a motor vehicle cooling module (10), comprising a lower plate (12) placed in a substantially horizontal position under the cooling module (10) and in which there is formed at least one through-opening (14, 16), and at least one movable flap (18, 20; 28, 30; 36) able to control the opening under the action of a control mechanism (22), making it possible to regulate the flow rate of a flow of cooling air (F) taken from outside the vehicle and passing through the cooling module (10), **characterized in that** the bottom plate (12) comprises a first opening (14) positioned upstream of the cooling module (10) and controlled by a first flap (18; 28) and a second opening (16) positioned downstream of the cooling module (10) and controlled by a second flap (20; 30).

2. Device according to Claim 1, **characterized in that** the flap (18; 20) is of planar overall shape and slidably mounted.

3. Device according to Claim 2, **characterized in that** the flap (18, 20) is slidably mounted so that it can slide in the longitudinal direction of the vehicle (axis X).

4. Device according to Claim 2, **characterized in that** the flap (18, 20) is slidably mounted so that it can slide in the transverse direction of the vehicle (axis Y).

5. Device according to Claim 1, **characterized in that** the flap (28, 30; 36) is of planar overall shape and pivot-mounted about an axis (32, 34; 38).

6. Device according to Claim 5, **characterized in that** the flap (28, 30; 36) is pivot-mounted so that it can pivot about an axis (32, 34; 38) running in the transverse direction of the vehicle (axis Y).

7. Device according to Claim 5, **characterized in that** the flap (28, 30; 36) is pivot-mounted so that it can pivot between a closed position in which it extends in the plane of the bottom plate (12), and an open position in which it extends obliquely with respect to the plane of the bottom plate (12).

8. Device according to Claim 7, **characterized in that**, in the open position, the flap (28, 30) extends obliquely above the plane of the bottom plate (12).

9. Device according to Claim 7, **characterized in that** in the open position, the flap (28, 30; 36) extends obliquely below the plane of the bottom plate (12).

10. Device according to one of Claims 1 to 9, **characterized in that** the bottom plate (12) is of planar overall shape.

11. Device according to one of Claims 1 to 9, **characterized in that** the bottom plate (12) comprises an anterior part (42) positioned forward of the cooling module (10) and a posterior part (44) positioned behind the cooling module (10) and situated higher up than the anterior part.

12. Device according to one of Claims 1 to 11, **characterized in that** the control mechanism (22) comprises a stepping motor (24) functionally coupled to the flap(s) (18, 20; 28, 30; 36).

13. Device according to one of Claims 1 to 12, **characterized in that** the control mechanism (22) manages the position of the flap or flaps (18, 20; 28, 30; 36) under the action of an electronic module (26) which manages the thermal components and take the vehicle speed and other parameters, for example the external temperature, the temperature of the vehicle engine, etc. into consideration.

14. Device according to one of Claims 1 to 13, in which the cooling module (10) is mounted in a front end support (48), **characterized in that** the flap or flaps (18, 20; 28, 30; 36) and the control mechanism (22) are borne by the front end support (48), while the bottom plate (12) is produced in the form of a separate component.

15. Device according to one of Claims 1 to 13, in which the cooling module (10) is mounted in a front end support (48), **characterized in that** the flap or flaps (18, 20; 28, 30; 36), the control mechanism (22) and the bottom plate (12) are borne by the front end support (48).

16. Device according to one of Claims 1 to 13, in which the cooling module (10) is mounted in a front end support (48), **characterized in that** the flap or flaps (18, 20; 28, 30; 36), the control mechanism (22) and the bottom plate (12) constitute a separate assembly designed to be attached to the front end support (48).

17. Motor vehicle having a front end facade and comprising a device according to any one of Claims 1 to 16, **characterized in that** the said vehicle is capable of having no air opening in the front end facade of the said vehicle.

## Patentansprüche

1. Vorrichtung zur Regelung eines Luftstroms durch ein Kühlmodul (10) eines Kraftfahrzeugs, die eine untere Platte (12), die in im Wesentlichen waagrechter Stellung unter dem Kühlmodul (10) angeordnet und in der mindestens eine Durchgangsöffnung (14, 16) ausgebildet ist, sowie mindestens eine bewegliche Klappe (18, 20; 28, 30; 36) enthält, die die Öffnung unter der Wirkung eines Steuermechanismus (22) steuern kann, was es ermöglicht, den Durchsatz eines Kühlluftstroms (F) zu regeln, der außerhalb des Fahrzeugs aufgenommen wird und das Kühlmodul (10) durchquert, **dadurch gekennzeichnet, dass** die untere Platte (12) eine erste Öffnung (14), die vor dem Kühlmodul (10) angeordnet ist und von einer ersten Klappe (18; 28) gesteuert wird, und eine zweite Öffnung (16) aufweist, die hinter dem Kühlmodul (10) angeordnet ist und von einer zweiten Klappe (20; 30) gesteuert wird.

2. Vorrichtung nach Anspruch 1, **dadurch gekennzeichnet, dass** die Klappe (18; 20) von allgemein ebener Form und gleitend montiert ist.

3. Vorrichtung nach Anspruch 2, **dadurch gekennzeichnet, dass** die Klappe (18; 20) in Längsrichtung des Fahrzeugs (Achse X) gleitend montiert ist.

4. Vorrichtung nach Anspruch 2, **dadurch gekennzeichnet, dass** die Klappe (18; 20) in Querrichtung des Fahrzeugs (Achse Y) gleitend montiert ist.

5. Vorrichtung nach Anspruch 1, **dadurch gekennzeichnet, dass** die Klappe (28, 30; 36) von allgemein ebener Form und um eine Achse (32, 34; 38) schwenkbar montiert ist.

6. Vorrichtung nach Anspruch 5, **dadurch gekennzeichnet, dass** die Klappe (28, 30; 36) um eine Achse (32, 34, 38) schwenkbar montiert ist, die sich in der Querrichtung des Fahrzeugs (Achse Y) erstreckt.

7. Vorrichtung nach Anspruch 5, **dadurch gekennzeichnet, dass** die Klappe (28, 30; 36) zwischen einer Schließstellung, in der sie sich in der Ebene der unteren Platte (12) erstreckt, und einer Öffnungsstellung schwenkbar montiert ist, in der sie sich schräg bezüglich der Ebene der unteren Platte (12) erstreckt.

8. Vorrichtung nach Anspruch 7, **dadurch gekennzeichnet, dass** die Klappe (28, 30) sich in der Öffnungsstellung schräg oberhalb der Ebene der unteren Platte (12) erstreckt.

9. Vorrichtung nach Anspruch 7, **dadurch gekennzeichnet, dass** die Klappe (28, 30; 36) sich in der Öffnungsstellung schräg unterhalb der Ebene der unteren Platte (12) erstreckt.

10. Vorrichtung nach einem der Ansprüche 1 bis 9, **dadurch gekennzeichnet, dass** die untere Platte (12) eine allgemein ebene Form hat.

11. Vorrichtung nach einem der Ansprüche 1 bis 9, **dadurch gekennzeichnet, dass** die untere Platte (12) einen vorderen Bereich (42), der vor dem Kühlmodul (10) angeordnet ist, und einen hinteren Bereich (44) enthält, der hinter dem Kühlmodul (10) angeordnet ist und sich auf einer höheren Ebene bezüglich des vorderen Bereichs befindet.

12. Vorrichtung nach einem der Ansprüche 1 bis 11, **dadurch gekennzeichnet, dass** der Steuermechanismus (22) einen Schrittschaltmotor (24) enthält, der funktionell mit der Klappe (den Klappen) (18, 20; 28, 30; 36) gekoppelt ist.

13. Vorrichtung nach einem der Ansprüche 1 bis 12, **dadurch gekennzeichnet, dass** der Steuermechanismus (22) die Stellung der Klappe oder der Klappen (18, 20; 28, 30; 36) unter der Wirkung eines elektronischen Moduls (26) verwaltet, das die Wärmeelemente verwaltet und die Geschwindigkeit des Fahrzeugs und andere Parameter berücksichtigt, zum Beispiel die Außentemperatur, die Temperatur des Motors des Fahrzeugs, usw.

14. Vorrichtung nach einem der Ansprüche 1 bis 13, bei der das Kühlmodul (10) in einen Frontblechträger (48) montiert ist, **dadurch gekennzeichnet, dass** die Klappe oder die Klappen (18, 20; 28, 30; 36) und der Steuermechanismus (22) von dem Frontblechträger (48) getragen werden, während die untere Platte (12) in Form eines getrennten Bauteils hergestellt ist.

15. Vorrichtung nach einem der Ansprüche 1 bis 13, bei der das Kühlmodul (10) in einen Frontblechträger (48) montiert ist, **dadurch gekennzeichnet, dass** die Klappe oder die Klappen (18, 20; 28, 30; 36), der Steuermechanismus (22) und die untere Platte (12) vom Frontblechträger (48) getragen werden.

16. Vorrichtung nach einem der Ansprüche 1 bis 13, bei der das Kühlmodul (10) in einen Frontblechträger (48) montiert ist, **dadurch gekennzeichnet, dass** die Klappe oder die Klappen (18, 20; 28, 30; 36), der Steuermechanismus (22) und die untere Platte (12) eine getrennte Einheit bilden, die eingerichtet ist, um an den Frontblechträger (48) angebaut zu werden.

17. Kraftfahrzeug, das ein Frontteil aufweist und eine Vorrichtung nach einem der Ansprüche 1 bis 16 enthält, **dadurch gekennzeichnet, dass** das Fahrzeug geeignet ist, um keine Luftöffnung im Bereich des Frontteils des Fahrzeugs aufzuweisen.
